# EUROPÄISCHE PATENTANMELDUNG

(11) **EP 1 314 909 A1**
(43) Veröffentlichungstag der Anmeldung: **28.05.2003**
(21) Anmeldenummer: 01127804.1
(22) Anmeldetag: 22.11.2001
(51) Int. Cl.: F16F 9/54, F16F 3/02, E05F 1/10

(54) **Federeinrichtung für Klappensystem**

(71) Anmelder: Ford Global Technologies, Inc., A subsidiary of Ford Motor Company, Dearborn, Michigan 48126 (US)
(72) Erfinder: Ufrecht, Martin, 50668 Köln (DE)
(74) Vertreter: Drömer, Hans-Carsten, Dr.-Ing.

(57) **Zusammenfassung**

Die Erfindung bezieht sich auf eine Federeinrichtung (10) für ein schwenkbares Klappensystem (11), insbesondere für ein Heckklappensystem eines Kraftfahrzeuges, mit wenigstens einem Gasfederelement (13), das, beabstandet von der horizontalen Schwenkachse (14) des Klappensystems (11), einerseits gelenkig am Karosseriekörper und andererseits gelenkig am Klappensystem (11) an Kraftanlenkungspunkten (16) gelagert ist. Sie ist dadurch gekennzeichnet, daß zwischen Gasfederelement (13) und Karosseriekörper und/oder zwischen Gasfederelement (13) und Klappensystem (11) ein Befestigungsmechanismus (12) angeordnet ist, der Mittel (15) zur automatischen, temperaturabhängigen Verschiebung zumindest eines Kraftangriffspunktes (16) des wenigstens einen Gasfederelementes (13) umfaßt. Damit wird mit einfachen Mitteln die Möglichkeit geschaffen, einen wirkungsvollen Ausgleich der Temperaturabhängigkeit der Federeinrichtung mit Gasfeder(n) zu erzielen und gleichzeitig eine einfach und wirtschaftlich herstellbare Anordnung bereitzustellen, die auch gut in der Handhabung ist.

## Beschreibung

Die Erfindung bezieht sich auf eine Federeinrichtung für ein schwenkbares Klappensystem, insbesondere für ein Heckklappensystem eines Kraftfahrzeuges, gemäß dem Oberbegriff des Anspruches 1.

Aus dem Stand der Technik sind verschiedene Federeinrichtungen für ein schwenkbares Klappensystem, insbesondere für ein Heckklappensystem eines Kraftfahrzeuges, bekannt. Es benutzen dabei heute gebräuchliche Heckklappensysteme in der Regel einen Federeinrichtung aus Gasfedem, der das relativ hohe Heckklappengewicht ausgleicht. Da die Gasfederkraft allerdings stark von der Temperatur abhängt, d.h. die Kraft steigt mit zunehmender Temperatur stark an (pro 10°C etwa um 4,5%), verändern sich dabei auch z.B. die Bedienkräfte für die Klappe. Dieser Effekt führt außerdem dazu, daß z.B. die Klappe bei extrem niedrigen Temperaturen nicht offen stehen bleibt und bei hohen Temperaturen die Schließkräfte bei geöffneter Klappenstellung ansteigen. Für das sich daraus ergebende Problem des Ausgleichens der Temperaturabhängigkeit gibt es eine Reihe von Lösungsansätzen. So ist z.B. denkbar, daß der Druck in der Gasfeder temperaturabhängig angepaßt wird, was allerdings nur mit einem hohen konstruktiven Aufwand zu bewerkstelligen ist. Bei den weiterhin bekannten reinen mechanischen Lösungen fehlt oftmals eine Dämpfungswirkung völlig, es kommt zu unerwünschten Geräuschbildungen und hartem Anschlagen mit Nachschwingen der Heckklappe.

Weiterhin ist z.B. aus der DE 196 64 939 A1 eine Anordnung mit einer Kombination einer Gasfeder mit einer mechanischen Feder bekannt. Durch diese kombinierte Anwendung von Gasfeder und mechanischer Feder soll auch bei niedrigen Temperaturen, bei denen eine reine Gasfeder eine schlechte Federunterstützung gewährleistet, trotzdem eine gute Federunterstützung erzielt werden. Durch die gleichzeitige Verwendung einer Gasfeder und einer mechanischen Feder soll außerdem eine wirkungsvolle Dämpfung des Federelementes erreicht werden. Eine derartige Anordnung zeigt also deutlich verbesserte Funktionseigenschaften, sie ist allerdings konstruktiv äußerst aufwendig und somit kostspielig in der Herstellung.

Aus der JP 11048784 ist außerdem eine Federeinrichtung für ein Heckklappensystem bekannt, bei dem zwei gegenläufig wirkende Gasfedem zum Öffnen und Schließen eines Heckklappensystems ausgebildet sind. Es wirkt dabei eine erste Gasfeder in Öffnungsrichtung und eine zweite Gasfeder in Schließrichtung des Heckklappensystems. In diesem Falle sollen sich die Kräfteänderungen infolge einer Temperaturänderung durch die gegenläufige Kraftwirkungsrichtung gegenseitig aufheben. Eine derartige Anordnung ist ebenfalls konstruktiv aufwendig und somit kostspielig in der Herstellung, weiterhin ist eine Verbesserung der Funktionseigenschaften in den Fällen zweifelhaft, bei denen unterschiedliche Einflüsse aufgrund von Temperaturänderungen an den einzelnen Gasfedem vorliegen.

Der Erfindung liegt die Aufgabe zugrunde, die bekannten Federeinrichtungen für ein schwenkbares Klappensystem, insbesondere für ein Heckklappensystem eines Kraftfahrzeuges unter Beibehaltung der bisherigen Vorteile in der Weise zu verbessern bzw. weiterzuentwickeln, daß ein wirkungsvoller Ausgleich der Temperaturabhängigkeit der Federeinrichtung mit Gasfeder(n) erzielt wird, wobei die gewünschte Anordnung gleichzeitig einfach und wirtschaftlich herstellbar und gut in der Handhabung sein soll.

Die Aufgabe wird erfindungsgemäß mit den Merkmalen des Anspruches 1 gelöst.

Indem zwischen Gasfederelement (13) und Karosseriekörper und/oder zwischen Gasfederelement (13) und Klappensystem (11) ein Befestigungsmechanismus (12) angeordnet ist, der Mittel (15) zur automatischen, temperaturabhängigen Verschiebung zumindest eines Kraftangriffspunktes (16) des wenigstens einen Gasfederelementes (13) umfaßt, wird auf diese Weise erstmalig mit einfachen Mitteln die Möglichkeit geschaffen, einen wirkungsvollen Ausgleich der Temperaturabhängigkeit der Federeinrichtung mit Gasfeder(n) zu erzielen und gleichzeitig eine einfach und wirtschaftlich herstellbare Anordnung bereitzustellen, die auch gut in der Handhabung ist.

Es wird dabei durch das Vorsehen der Mittel zur automatischen, temperaturabhängigen Verschiebung eines Kraftangriffspunktes erreicht, daß ein Kraftangriffspunkt der Gasfeder so verändert wird, daß der entsprechend sich ändernde Hebelarm die veränderte Gasfederkraft bei Temperaturänderung ausgleicht. Mit der erfindungsgemäßen Anordnung wird also ein Gasfederanlenkpunkt temperaturabhängig verschoben, um die durch Temperaturerhöhung steigende Gasfederkraft durch Verringerung des Abstandes zur Schwenkachse des Klappensystems im offenen Klappenzustand zu kompensieren. Bei geschlossener Klappe wird außerdem diese Verschiebung die Gasfederkraft senken, indem die Gasfeder nicht vollständig zusammengeschoben wird und sich ihre Progressivität nicht so stark auswirkt. Dabei kann sowohl der kärosserieseitige als auch der hecklappenseitige Kraftangriffspunkt Mittel zum automatischen, temperaturabhängigen Verschieben aufweisen.

Bei der bevorzugten Ausführungsform der vorliegenden Erfindung sind die Mittel zur Verschiebung eines Kraftangriffspunktes des Gasfederelementes translatorisch verschiebbar ausgebildet. Dabei empfiehlt es sich, daß die Mittel zur Verschiebung eines Kraftangriffspunktes des Gasfederelementes zur Erzeugung einer Längenänderung durch thermische Ausdehnung im Falle einer Temperaturänderung ausgebildet sind. Auf diese Weise wird die Temperaturänderung direkt in die gewünschte Verschiebung des Kraftangriffspunktes des Gasfederelementes und damit in die gewünschte Änderung des Hebelarmes umgesetzt.

In einer bevorzugten Ausführung weisen die Verschiebung mittels eines Bimetallmechanismus erzeugt. Dieser Bimetallmechanismus verkürzt bzw. verlängert sich mit änderemder Temperatur und verschiebt somit den Anlenkpunkt in einfacher Weise in die neue Position.

Nach einem weiteren Merkmal der vorliegenden Erfindung umfassen die Mittel zur Verschiebung des Kraftangriffspunktes des Gasfederelementes ein auf einer am Gasfederelement angeordneten Welle befindliches Gleitelement und zu dessen verschieblichen Lagerung vorgesehene Langlöcher in der Gehäusewand des Befestigungselementes. Mit diesen Mitteln wird die Verschiebbarkeit des Kraftangriffspunktes des Gasfederelementes auf konstruktiv einfache Weise durch ein Verschieben des Gleitelementes entlang der Langlöcher des Gehäuses realisiert.

Zweckmäßig ist es nach einem weiteren Merkmal der vorliegenden Erfindung außerdem, daß das wenigstens eine Gasfederelement zur besseren Lagesicherung der einzelnen Bimetallelemente des Bimetallmechanismus bei nicht wirksamer Gasfeder ein zusätzliches Federelement umfaßt. Dadurch wird verhindert, daß einzelne Bimetallelemente aus der Vorrichtung herausfallen, wenn z.B. bei der Montage das Paket ohne die Gasfederkraft nicht unter Spannung gehalten wird. Dabei empfiehlt sich, daß das zusätzliche Federelement des Gasfederelementes benachbart zu dem auf der Welle befindlichen Gleitelement angeordnet ist, so daß dieses zusätzliche Federelement über das Gleitelement direkt auf die Bimetallelemente einwirken kann.

Nach einem letzten Merkmal der vorliegenden Erfindung umfaßt das Gasfederelement zum Ermöglichen seines vollständigen Umlegens in dem geschlossenen Zustand des Klappensystems eine gabelförmige Verlängerung.

Die Erfindung ist in den Figuren der Zeichnung in mehreren Ausführungsbeispielen dargestellt. Es zeigen:
- Fig. 1: eine schematische Seitenansicht einer erfindungsgemäßen Federeinrichtung mit einem angedeuteten Heckklappensystem eines Kraftfahrzeuges in offener und geschlossener Position,
- Fig. 2: eine schematische Querschnittsansicht eines Teilbereiches des Befestigungsmechanismus der erfindungsgemäßen Federeinrichtung mit schematisch dargestelltem Bimetallmechanismus,
- Fig. 3: eine schematische Seiten- Schnittansicht des Teilbereiches des Befestigungsmechanismus der erfindungsgemäßen Federeinrichtung gemäß Fig. 2,

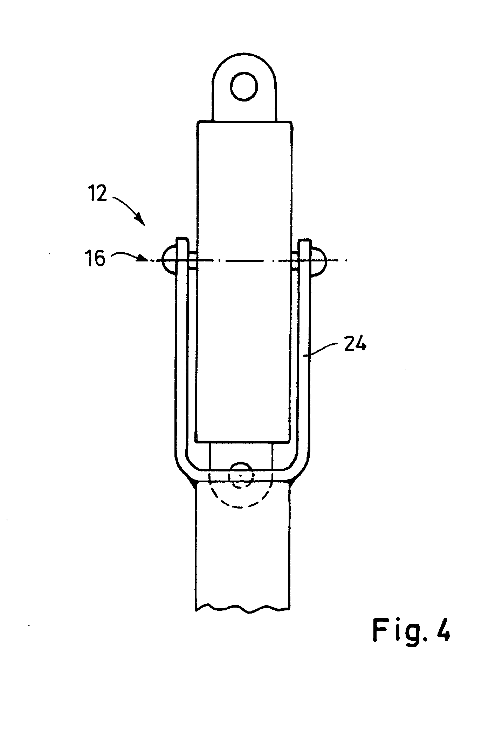

- Fig. 4: eine schematische Ansicht eines Teilbereiches des Befestigungsmechanismus einer abgewandelten Ausführungsform der erfindungsgemäßen Federeinrichtung.

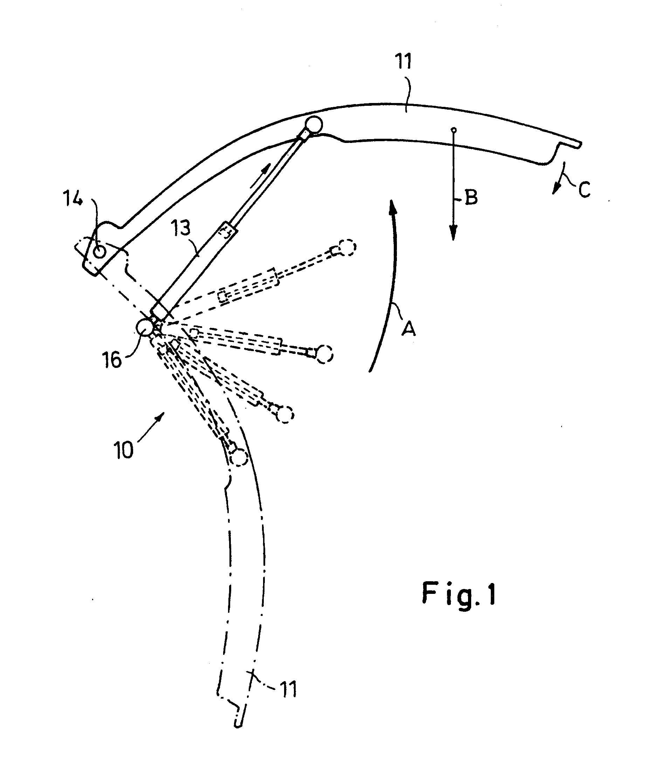

Die erfindungsgemäße Federeinrichtung für ein schwenkbares Klappensystem, insbesondere für ein Heckklappensystem eines Kraftfahrzeuges, ist generell mit 10 und das schwenkbare Klappensystem ist mit 11 bezeichnet. Die Federeinrichtung 10 umfaßt einen Befestigungsmechanismus 12 mit wenigstens einem Gasfederelement 13, das, beabstandet von der horizontalen Schwenkachse 14 des Klappensystems 11, einerseits gelenkig am Karosseriekörper und andererseits gelenkig am Klappensystem 11 an in den Fig. der Zeichnung nicht bezeichneten Lagerstellen gelagert ist. Das Klappensystem 11 ist in der Fig. 1 der Zeichnung in geöffnetem Zustand und in geschlossenem Zustand dargestellt, wobei sich das Klappensystem zum Öffnen in Richtung des Pfeils A verschwenken läßt. In der Fig. 1 ist außerdem das Gewicht des Klappensystems 11 mit Pfeil B und die Handkraft der Bedienperson zum Schließen des Klappensystems 11 mit Pfeil C angegeben.

Der Befestigungsmechanismus 12 der erfindungsgemäßen Federeinrichtung 10 umfaßt zur Kompensation der Temperaturabhängigkeit Mittel 15 zur automatischen, temperaturabhängigen Verschiebung des Kraftangriffspunktes 16 des wenigstens einen Gasfederelementes 13. Die Mittel 15 zur automatischen, temperaturabhängigen Verschiebung des Kraftangriffspunktes 16 des wenigstens einen Gasfederelementes 13 sind bevorzugt translatorisch verschiebbar ausgebildet. Durch das Vorsehen der Mittel 15 zur Verschiebung des Kraftangriffspunktes 16 wird ein wirkungsvoller Ausgleich der Temperaturabhängigkeit der Federeinrichtung 10 mit Gasfeder(n) erzielt und gleichzeitig eine einfach und wirtschaftlich herstellbare Anordnung bereitgestellt, die auch gut in der Handhabung ist. Durch z.B. die Längsverschiebung wird dabei der Kraftangriffspunkt 16 der Gasfeder so verändert, daß der entsprechend sich ändernde Hebelarm die veränderte Gasfederkraft ausgleicht. Der Gasfederanlenkpunkt wird also temperaturabhängig verschoben, um die durch Temperaturerhöhung steigende Gasfederkraft durch Verringerung des Abstandes zur Schwenkachse 14 des Klappensystems 11 im offenen Klappenzustand zu kompensieren.

Die Mittel 15 zur Verschiebung des Kraftangriffspunktes 16 des Gasfederelementes 13 können zur Erzeugung einer Längenänderung durch thermische Ausdehnung im Falle einer Temperaturänderung ausgebildet sein. Dadurch wird die Temperaturänderung direkt in die gewünschte Verschiebung des Kraftangriffspunktes 16 des Gasfederelementes 13 und damit in die gewünschte Änderung des Hebelarmes umgesetzt. Dabei können bevorzugt die Mittel 15 zur Verschiebung des Kraftangriffspunktes 16 des Gasfederelementes 13 einen Bimetallmechanismus 17 umfassen, der sich mit steigender Temperatur verkürzt und dadurch den Anlenkpunkt in einfacher Weise in die neue Position verschiebt.

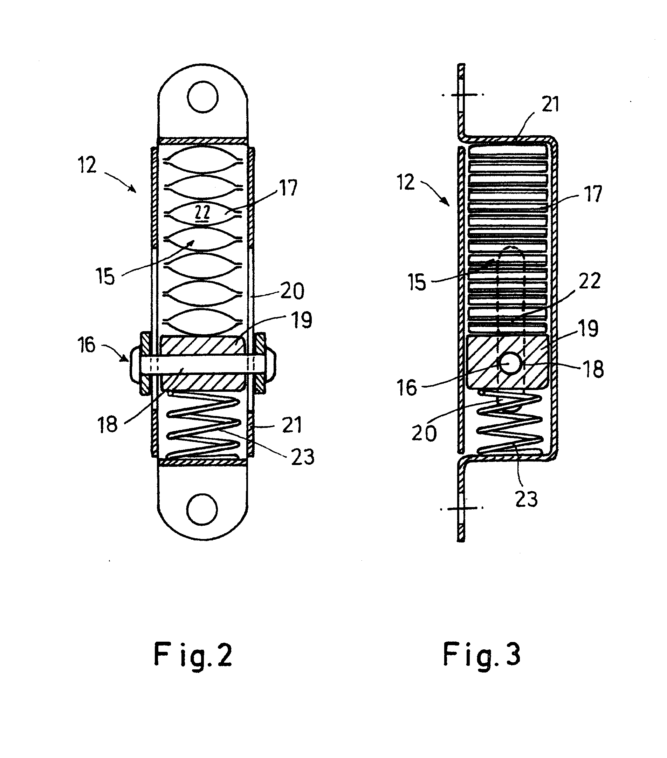

Die Mittel 15 zur Verschiebung des Kraftangriffspunktes 16 des Gasfederelementes 13 umfassen bei der in den Fig. 2 und 3 der Zeichnung dargestellten Ausführungsform ein auf einer am Gasfederelement 13 angeordneten Welle 18 befindliches Gleitelement 19 und zu dessen verschieblichen Lagerung vorgesehene Langlöcher 20 in der Gehäusewand 21 des Befestigungselementes 12. Dadurch wird eine einfache Verschiebbarkeit des Kraftangriffspunktes 16 des Gasfederelementes 13 durch ein Verschieben des Gleitelementes 19 entlang der Langlöcher 20 erreicht. Es kann dabei die Welle 18 mit dem Gleitelement 19 mit üblichen, nicht bezeichneten Befestigungsmitteln an der Gehäusewand 21 des Befestigungselementes 12 in ihrer Lage gesichert sein.

### BEZUGSZEICHENLISTE

- 10: Federeinrichtung
- 11: Klappensystem
- 12: Befestigungsmechanismus
- 13: Gasfederelement
- 14: horizontale Schwenkachse (von 11)
- 15: Mittel zur Verschiebung von (16)
- 16: Kraftangriffspunkt
- 17: Bimetallmechanismus
- 18: Welle (an 13)
- 19: Gleitelement
- 20: Langloch (in 21)
- 21: Gehäusewand (von 12)
- 22: Bimetallelement
- 23: zusätzliches Federelement (von 12)
- 24: gabelförmige Verlängerung (von 13)

## Patentansprüche

1. Federeinrichtung (10) für ein schwenkbares Klappensystem (11), insbesondere für ein Heckklappensystem eines Kraftfahrzeuges, mit wenigstens einem Gasfederelement (13), das, beabstandet von der horizontalen Schwenkachse (14) des Klappensystems (11), einerseits gelenkig am Karosseriekörper und andererseits gelenkig am Klappensystem (11) an Kraftanlenkungspunkten (16) gelagert ist,
**dadurch gekennzeichnet, daß**
zwischen Gasfederelement (13) und Karosseriekörper und/oder zwischen Gasfederelement (13) und Klappensystem (11) ein Befestigungsmechanismus (12) angeordnet ist, der Mittel (15) zur automatischen, temperaturabhängigen Verschiebung zumindest eines Kraftangriffspunktes (16) des wenigstens einen Gasfederelementes (13) umfaßt.

2. Federeinrichtung nach Anspruch 1,
**dadurch gekennzeichnet, daß**
die Mittel (15) zur Verschiebung eines Kraftangriffspunktes (16) des Gasfederelementes (13) translatorisch verschiebbar ausgebildet sind.

3. Federeinrichtung nach Anspruch 1 oder 2,
**dadurch gekennzeichnet, daß**
die Mittel (15) zur Verschiebung eines Kraftangriffspunktes (16) des Gasfederelementes (13) zur Erzeugung einer Längenänderung durch thermische Ausdehnung im Falle einer Temperaturänderung ausgebildet sind.

4. Federeinrichtung nach Anspruch 3,
**dadurch gekennzeichnet, daß**
die Mittel (15) zur Verschiebung eines Kraftangriffspunktes (16) des Gasfederelementes (13) einen Bimetallmechanismus (17) umfassen.

5. Federeinrichtung nach einem der Ansprüche 1 bis 4,
**dadurch gekennzeichnet, daß**
die Mittel (15) zur Verschiebung des Kraftangriffspunktes (16) des Gasfederelementes (13) ein auf einer am Gasfederelement (13) angeordneten Welle (18) befindliches Gleitelement (19) und zu dessen verschieblichen Lagerung vorgesehene Langlöcher (20) in der Gehäusewand (21) des Befestigungselementes (12) umfassen.

6. Federeinrichtung nach einem der Ansprüche 1 bis 5,
**dadurch gekennzeichnet, daß**
der Befestigungsmechanismus (12) zur besseren Lagesicherung der einzelnen Bimetallelemente (22) des Bimetallmechanismus (17) bei nicht wirksamer Gasfeder ein zusätzliches Federelement (23) umfaßt.

7. Federeinrichtung nach Anspruch 6,
**dadurch gekennzeichnet, daß**
das zusätzliche Federelement (23) des Befestigungsmechanismus (12) benachbart zu dem auf der Welle (18) befindlichen Gleitelement (19) angeordnet ist.

8. Federeinrichtung nach einem der Ansprüche 1 bis 7,
**dadurch gekennzeichnet, daß**
das Gasfederelement (13) zum Ermöglichen seines vollständigen Umlegens in dem geschlossenen Zustand des Klappensystems (11) eine gabelförmige Verlängerung 24 umfaßt.
